# FASCICULE DE BREVET EUROPEEN

(11) **EP 3 079 225 B1**
(45) Date de publication et mention de la délivrance du brevet: **29.03.2017**
(21) Numéro de dépôt: 16159346.2
(22) Date de dépôt: 09.03.2016
(51) Int. Cl.: H02J 9/00, H02J 7/00, H02J 7/02, H02J 9/06

(54) **DISPOSITIF D'ALIMENTATION ELECTRIQUE ET BATIMENT ASSOCIE**
VORRICHTUNG ZUR STROMVERSORGUNG, UND ENTSPRECHENDES GEBÄUDE
ELECTRIC POWER SUPPLY DEVICE AND ASSOCIATED BUILDING

(30) Priorité: 09.04.2015 FR 1553054
(43) Date de publication de la demande: 12.10.2016
(73) Titulaire: SLAT, 69410 Champagne au Mont d'Or (FR)
(72) Inventeur: BADOIL, Denis, 69210 BULLY (FR); BOCH, Stéphane, 69006 LYON (FR); PASINETTI, Fabrice, 69360 TERNAY (FR)
(74) Mandataire: Cabinet Laurent & Charras

(56) Documents cités:
- EP-A2- 2 498 372
- EP-A2- 2 602 906

## Description

### DOMAINE TECHNIQUE

La présente invention concerne le domaine des alimentations électriques destinées à alimenter des appareils électriques intégrés dans un bâtiment ou dans une agglomération. Ce type d'appareil électrique peut être une caméra, un routeur, un dispositif de contrôle d'accès d'une porte, un système d'alarme, une climatisation...

L'invention concerne également un bâtiment comprenant un tel dispositif d'alimentation électrique.

### ART ANTERIEUR

Il existe des adaptateurs secteur permettant d'alimenter un appareil électrique d'un bâtiment avec une tension continue par adaptation d'une tension alternative du secteur. Ces adaptateurs comportent une entrée de tension alternative connectée à un convertisseur de tension apte à convertir cette tension alternative en une tension continue connectée à une sortie de tension continue. La sortie de tension continue peut ainsi alimenter un appareil électrique d'un bâtiment avec une tension continue prédéterminée, par exemple 12V ou 24V.

Pour des besoins de domotique, certains de ces adaptateurs sont commandés à l'aide d'un système de commande apte à interrompre ou établir le fonctionnement du convertisseur de tension. Le système de commande peut être actionné par un bouton poussoir positionné sur le dispositif d'alimentation électrique ou par un système radio.

Cependant, le convertisseur de tension est dimensionné de telle sorte à couvrir les besoins maximaux en énergie de l'appareil électrique. Lorsque l'appareil électrique consomme une faible quantité de courant, le convertisseur de tension fournit une faible énergie comparativement aux besoins maximaux en énergie qu'il est capable de fournir. Le rendement entre l'énergie produite par le convertisseur de tension et l'énergie consommée pour faire fonctionner le convertisseur de tension est proche de 100% lorsque le convertisseur répond aux besoins maximaux de l'appareil électrique. Lorsque le convertisseur fournit une faible énergie, le rendement chute de manière exponentielle. Par exemple, pour fournir 20% des besoins maximaux en énergie de l'appareil électrique, le rendement du convertisseur est de 80% alors que pour fournir 10% des besoins maximaux en énergie de l'appareil électrique, le rendement du convertisseur est de 50%.

Les appareils électriques d'un bâtiment fonctionnent la plupart du temps avec une faible quantité d'énergie comparée aux besoins maximaux en énergie. Par exemple, un dispositif de contrôle d'accès d'une porte par un badge sans contact demeure dans un état de veille en attendant la détection d'un badge. Dans cet état de veille, le dispositif de contrôle d'accès consomme peu d'énergie, proche de 10% des besoins maximaux en énergie du dispositif. Le rendement du convertisseur de tension est alors proche de 50%. Lorsqu'un badge est détecté, le dispositif de contrôle d'accès « se réveille » pour vérifier que le badge est autorisé et pour, le cas échéant, ouvrir la porte. Dans cet état d'éveil, le dispositif de contrôle d'accès consomme une énergie proche des besoins maximaux en énergie. Cet état d'éveil ne dure que quelques secondes avant que le dispositif ne retourne en état de veille. Le dispositif de contrôle d'accès impose donc au convertisseur de tension de fonctionner la plupart du temps avec un faible rendement, proche de 50%.

En outre, le développement des bâtiments et des agglomérations à économie d'énergie est en plein essor. Ces bâtiments ou ces agglomérations à économie d'énergie comportent au moins un dispositif de production d'énergie qui produit de l'énergie électrique à partir d'une énergie renouvelable. Ce dispositif de production d'énergie peut être constitué de panneaux solaires, d'éoliennes ou tout autre dispositif de production d'énergie renouvelable.

Lorsque le dispositif de production d'énergie est en fonctionnement, au moins une partie de la consommation du bâtiment ou de l'agglomération est prélevée à partir de l'énergie générée par le dispositif de production d'énergie. Lorsque le dispositif de production d'énergie ne fonctionne plus, l'énergie du bâtiment ou de l'agglomération est prélevée sur le secteur. Cela peut se produire la nuit et par temps nuageux pour les panneaux solaires, ou lorsque la force du vent est insuffisante pour les éoliennes.

Certaines normes imposent une limite de consommation des bâtiments, par exemple 50W/m². Ainsi, les instants pour lesquels le dispositif de production d'énergie ne fonctionne plus peuvent disqualifier ces bâtiments.

Le problème technique consiste donc à limiter, au cours du temps, les besoins en énergie d'un bâtiment ou d'une agglomération.

On identifiera enfin le document de brevet EP 2 498 372 A2 qui se distingue de l'objet de la revendication indépendante 1 (en utilisant la formulation de celle-ci) par le fait que l'appareil électrique est intégré dans un bâtiment ou dans une agglomération et ensuite par le fait que le système de commande est apte à interrompre le fonctionnement du convertisseur de tension lorsqu'il détecte que le courant délivré par la sortie de tension continue est inférieur à une première valeur seuil.

### EXPOSE DE L'INVENTION

La présente invention vise à résoudre ce problème en utilisant un dispositif d'alimentation électrique d'un appareil électrique comportant une source de stockage d'énergie et un système de gestion apte à interrompre ou induire le fonctionnement d'un convertisseur de tension.

A cet effet, selon un premier aspect, l'invention concerne un dispositif d'alimentation électrique destiné à alimenter un appareil électrique intégré dans un bâtiment ou dans un réseau d'une agglomération, le dispositif comportant :
- une entrée de tension alternative,
- une sortie de tension continue,
- un convertisseur de tension apte à transformer la tension alternative de l'entrée en une tension continue,
- un système de commande apte à interrompre le fonctionnement du convertisseur de tension,
- un élément de stockage d'énergie, et
- un réseau interne de tension continue connecté à l'élément de stockage d'énergie, à la sortie et à la tension continue du convertisseur de tension.

Selon l'invention, le système de commande est apte :
- à détecter un état de charge de l'élément de stockage d'énergie,
- à mesurer un courant délivré par la sortie de tension continue,
- à interrompre le fonctionnement du convertisseur de tension lorsqu'il détecte que le courant délivré par la sortie de tension continue est inférieur à une première valeur seuil,
- à induire le fonctionnement du convertisseur de tension lorsqu'il détecte que la charge de l'élément de stockage d'énergie est inférieure à une deuxième valeur seuil, et
- à interrompre le fonctionnement du convertisseur de tension lorsqu'il détecte que la charge de l'élément de stockage d'énergie est supérieur à une troisième valeur seuil.

L'invention permet ainsi de réduire la consommation en énergie de l'appareil électrique alimenté par le dispositif d'alimentation électrique en limitant les périodes durant lesquelles le convertisseur de tension fonctionne avec un faible rendement. L'énergie consommée par l'appareil électrique est délivrée soit par le convertisseur de tension, soit par la source de stockage d'énergie. Lorsque le fonctionnement du convertisseur de tension est interrompu, il ne consomme plus d'énergie et l'appareil électrique est alimenté uniquement par la source de stockage d'énergie. Lorsque le fonctionnement du convertisseur de tension est induit, le convertisseur de tension alimente l'appareil électrique et recharge la source de stockage d'énergie. Durant cette phase, le convertisseur de tension fonctionne avec un rendement plus important car il doit délivrer une plus grande quantité d'énergie.

Dans l'exemple précédemment cité pour un appareil électrique correspondant à un dispositif de contrôle d'accès d'une porte par un badge sans contact, le convertisseur de tension d'un dispositif d'alimentation électrique de l'état de la technique fonctionne la plupart du temps avec une faible puissance de sortie (inférieure à 10% de sa puissance nominale) correspondant à un rendement compris entre 60 et 70%. Si la source de stockage d'énergie permet d'alimenter l'appareil électrique la moitié du temps, le convertisseur de tension ne sera utilisé que l'autre moitié du temps d'alimentation de l'appareil électrique. Au cours de cette période, la quantité d'énergie à produire sera de l'ordre de 20% de la puissance nominale du convertisseur. Le rendement du convertisseur de tension sera alors proche de 80%. Sur la durée totale d'alimentation de l'appareil électrique, les besoins en alimentation électriques seront ainsi diminués de 15 à 20%.

L'invention permet également de garantir une capacité minimum de charge dans l'élément de stockage car ce dernier est rechargé par le fonctionnement du convertisseur de tension lorsque la charge de l'élément de stockage est inférieure à une deuxième valeur seuil. Cette capacité minimum permet d'alimenter la charge en cas de coupure de courant au niveau de l'entrée de tension alternative.

En outre, lorsque le dispositif de production d'énergie d'un bâtiment fonctionne, une énergie renouvelable est stockée dans la source de stockage d'énergie du dispositif d'alimentation électrique. Lorsque ce dispositif de production d'énergie ne fonctionne pas, la source de stockage d'énergie peut alimenter l'appareil électrique connecté sur le dispositif d'alimentation électrique sans utiliser une énergie du secteur. L'invention permet ainsi de diminuer la puissance installée nécessaire en effaçant les pointes de consommation d'un bâtiment ou d'une agglomération.

Selon un mode de réalisation, le réseau interne de tension continue est connecté à la sortie de tension continue par l'intermédiaire d'un second convertisseur de tension. Ce mode de réalisation permet d'utiliser un élément de stockage d'énergie dont la capacité est particulièrement adaptée aux besoins de stockage d'énergie, et dont la tension de charge et de décharge peut être différente de la tension continue de l'appareil électrique.

Selon un mode de réalisation, l'élément de stockage d'énergie est une batterie au lithium. Les dispositifs de stockage des bâtiments, du type onduleur, comportent classiquement des batteries au plomb. Ces batteries présentent une durée de vie de 2 à 3 ans nécessitant un grand nombre de remplacement au cours de la vie d'un appareil électrique associé. En outre, ces batteries au plomb sont lourdes et encombrantes.

Ce mode de réalisation permet d'utiliser des batteries au lithium dont le poids et l'encombrement sont réduits par rapport aux batteries au plomb. En outre, la durée de vie d'une batterie au lithium est de l'ordre de 10 ans ce qui correspond sensiblement à la durée de vie des appareils électriques connectés sur le dispositif d'alimentation. Pour finir, la batterie au lithium présente également l'avantage de résister d'avantage aux microcycles de charge et de décharge, c'est-à-dire aux cycles de charge et de décharge incomplets par rapport à la charge et la décharge totale de la batterie.

Préférentiellement, l'élément de stockage d'énergie présente une capacité comprise entre 5 Wh et 5 KWh.

Selon un mode de réalisation, le dispositif comporte une entrée de commande du système de commande, le système de commande étant apte à interrompre ou induire le fonctionnement du convertisseur de tension en fonction d'un signal de l'entrée de commande. Ce mode de réalisation permet d'utiliser une commande extérieure pour gérer le fonctionnement du dispositif d'alimentation.

Selon un mode de réalisation, le signal comporte une plage horaire dans laquelle le système de commande interrompt le convertisseur de tension. Dans certaines plages horaires, par exemple la nuit, un dispositif de contrôle d'accès d'une porte et une climatisation sont peu utilisés. Les dispositifs d'alimentation électrique associés à ce type d'appareil électrique peuvent donc être alimentés exclusivement par l'élément de stockage d'énergie au cours de cette période.

Selon un mode de réalisation, le signal comporte une information météorologique destinée à prévoir les transitions météorologique du bâtiment ou de l'agglomération. Ce mode de réalisation permet d'anticiper la production d'énergie du dispositif de production d'énergie et de recharger les éléments de stockage des dispositifs d'alimentation avant que le vent ne manque de puissance ou que des nuages soient présents sur le bâtiment ou l'agglomération.

Selon un mode de réalisation, le dispositif comporte une sortie d'information du système de commande. Ce mode de réalisation permet de superviser le comportement du dispositif d'alimentation électrique et de contrôler de manière centralisée les cycles de charge et de décharge de l'élément de stockage d'énergie.

Selon un mode de réalisation, la sortie d'information comporte une information de géolocalisation du dispositif d'alimentation électrique, destinée à géolocaliser le dispositif dans le bâtiment ou dans l'agglomération. Ce mode de réalisation permet d'améliorer la maintenance du dispositif d'alimentation électrique.

Selon un deuxième aspect, l'invention concerne un bâtiment comportant au moins un dispositif d'alimentation électrique selon le premier aspect de l'invention, configuré de sorte à maintenir une consommation du bâtiment inférieure à une valeur donnée, par exemple 50 W/m².

### DESCRIPTION SOMMAIRE DES FIGURES

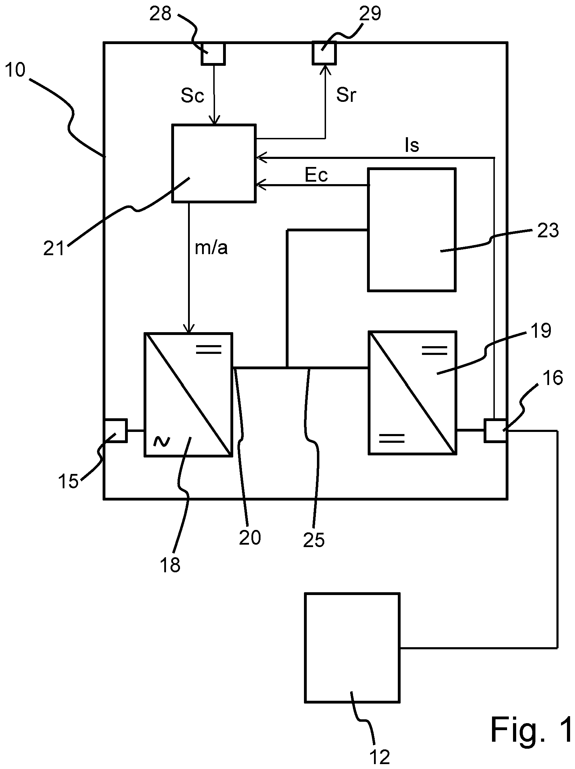

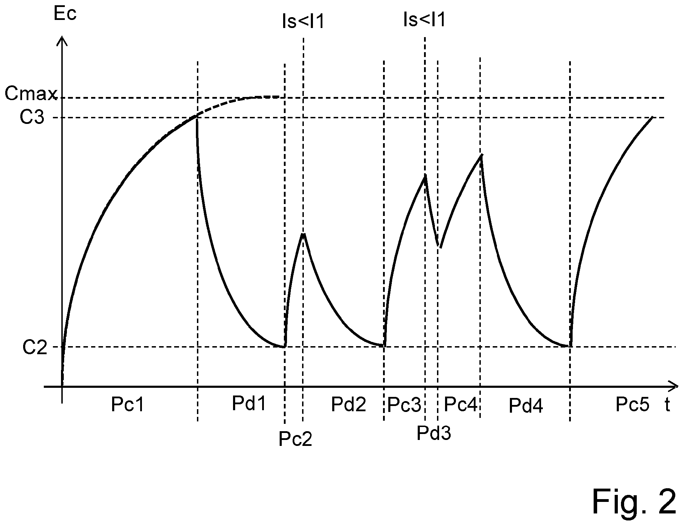

La manière de réaliser l'invention ainsi que les avantages qui en découlent, ressortiront bien du mode de réalisation qui suit, donné à titre indicatif mais non limitatif, à l'appui des figures annexées dans lesquelles les Figures 1 et 2 représentent :
- Figure 1 : une représentation schématique du circuit électrique du dispositif d'alimentation électrique selon un mode de réalisation de l'invention ; et
- Figure 2 : une représentation temporelle de l'évolution de l'état de charge de l'élément de stockage d'énergie du dispositif d'alimentation électrique de la Figure 1.

### DESCRIPTION DETAILLEE DE L'INVENTION

La Figure 1 illustre un dispositif d'alimentation électrique **10** connecté à un appareil électrique **12,** afin de répondre aux besoins électriques de l'appareil électrique **12.** Le dispositif **10** comporte une entrée **15** de tension alternative, connectée à un réseau électrique d'un bâtiment ou d'une agglomération, et une sortie **16** de tension continue connectée à l'appareil électrique **12.**

Un premier convertisseur de tension **18** est connecté à l'entrée **15,** de sorte à transformer la tension alternative de l'entrée **15** en une tension continue **20.** La tension continue **20** est connectée sur un réseau interne **25** de tension continue. Le réseau interne **25** de tension continue est connecté à un deuxième convertisseur de tension **19** qui transforme la tension continue du réseau interne **25** en une tension continue adaptée à l'appareil électrique **12.** La sortie **16** de tension continue est connectée à une sortie du deuxième convertisseur de tension **19.**

Le dispositif d'alimentation électrique **10** comporte également un élément de stockage d'énergie **23** connecté au réseau interne **25.** De préférence, l'élément de stockage d'énergie **23** est une batterie au lithium, dont la capacité est comprise entre 5 Wh et 5 KWh.

Le dispositif d'alimentation électrique **10** est commandé par un système de commande **21.** Le système de commande **21** détecte un état de la charge **Ec** de l'élément de stockage d'énergie **23** et mesure un courant **Is** délivré par la sortie **16** au cours du temps. En fonction de cet état de la charge **Ec** et du courant **Is,** le système de commande **21** commande le fonctionnement ou l'arrêt du premier convertisseur de tension **18.** A cet effet, le signal **m/a** permet d'interrompre ou de mettre en marche le premier convertisseur de tension **18.**

Le système de commande **21** est également relié à une entrée de commande externe **28** et à une sortie d'information **29.** Cette entrée de commande externe **28** et cette sortie d'information **29** sont réalisées par une liaison série, un câble internet, une liaison sans fil ou tout autre moyen connu.

L'entrée de commande **28** transmet un signal **Sc** au système de commande **21** afin de commander la mise en marche ou l'interruption du premier convertisseur de tension **18** depuis un dispositif externe.

La sortie d'information **29** permet de transmettre un signal **Sr** afin de rendre compte de l'état du premier convertisseur de tension **18** et/ou de l'élément de stockage **23** à ce dispositif externe. En variante, le signal **Sr** permet également de transmettre une information de géolocalisation du dispositif d'alimentation **10.**

La figure 2 illustre un exemple de variations de la charge **Ec** de l'élément de stockage **23** en fonction d'un temps effectif d'utilisation du dispositif d'alimentation **10.**

Dans une première phase **Pc1,** l'élément de stockage **23** est complètement déchargé et le système de commande **21** impose la mise en fonctionnement **m**/**a** du premier convertisseur de tension **18.** L'élément de stockage **23** est ainsi chargé par l'énergie alternative provenant de l'entrée **15** et convertie par le premier convertisseur **18.** Lors de cette phase de charge **Pc1,** l'état de charge **Ec** de l'élément de stockage **23** croit de manière logarithmique en direction d'un état de charge maximum **Cmax.** Cette phase de charge **Pc1** est stoppée lorsque le système de commande **21** détecte que la charge **Ec** de l'élément de stockage **23** est supérieure à une valeur seuil **C3.**

Commence alors une première phase de décharge **Pd1,** au cours de laquelle le système de commande **21** interrompt **m**/**a** le fonctionnement du premier convertisseur de tension **18.** L'élément de stockage **23** se décharge alors pour combler les besoins en énergie de l'appareil électrique **12.** Lors de cette phase de décharge **Pd1**, l'état de charge **Ec** de l'élément de stockage **23** décroit de manière logarithmique en direction d'un état de charge **Ec** nul. Cette phase de décharge **Pd1** est stoppée lorsque le système de commande **21** détecte que la charge **Ec** de l'élément de stockage **23** est inférieure à une valeur seuil **C2.** Les phases de charge **Pc1-Pc5** et de décharge **Pd1-Pd4** s'alternent ainsi pendant toute la durée de vie du dispositif d'alimentation **10.**

Certains évènements externes peuvent modifier cette alternance de phases de charge **Pc1-Pc5** et de décharge **Pd1-Pd4.** Par exemple, le signal **Sc** externe peut indiquer une plage horaire au cours de laquelle l'appareil électrique **12** est particulièrement peu sollicité, l'élément de stockage **23** sera donc préférentiellement chargé avant d'entrer dans cette plage horaire.

Pour un exemple illustré sur la figure 2, au cours des phases de charge **Pc2** et **Pc3,** le système de commande **21** détecte que le courant **Is** est inférieur à une valeur seuil **I1,** le rendement du convertisseur de tension **18** est donc particulièrement faible. Suite à cette information, les phases de charge **Pc2** et **Pc3** sont stoppées pour entamer une phase de décharge **Pd2, Pd3** au cours desquelles l'élément de stockage d'énergie **23** alimente l'appareil électrique **12.**

Pour un autre exemple illustré sur la figure 2, au cours de la phase de décharge **Pd3,** le signal **Sc** informe que la météo va bientôt changer et que le dispositif de production d'énergie renouvelable du bâtiment va devenir inopérant. Suite à cette information, la phase de décharge **Pd3** est stoppée pour entamer une phase de charge **Pc4,** alors que le dispositif de production d'énergie renouvelable du bâtiment est toujours opérationnel. Lorsque les conditions climatiques sont telles que le dispositif de production d'énergie renouvelable du bâtiment est inopérant, la phase de charge **Pc4** est stoppée pour privilégier la consommation de l'élément de stockage **23** au cours d'une phase de décharge **Pd4.**

En pratique, dans la phase de décharge **Pd1-Pd4** de l'élément de stockage **23,** l'appareil électrique **12** ne sollicite pas constamment un besoin en alimentation électrique et la phase de décharge **Pd1-Pd4** de l'élément de stockage **23** peut durer plusieurs jours. De même, dans la phase de charge **Pc1-Pc5** de l'élément de stockage **23,** si la charge est préférentiellement effectuée par un dispositif de production d'énergie renouvelable, cette phase de charge **Pc1-Pc5** peut être entrecoupée de phase durant lesquelles le dispositif de production d'énergie est inopérant.

L'invention permet ainsi de réduire la consommation énergétique d'un appareil électrique **12** intégré dans un bâtiment ou dans une agglomération. L'invention permet de paramétrer un grand nombre de scénarios afin de réduire la consommation énergétique d'un bâtiment ou d'une agglomération. En outre, l'invention permet la mise en oeuvre d'un bâtiment particulièrement performant dont la consommation est contrôlée pour ne pas dépasser une consommation donnée, par exemple 50 W/m².

## Revendications

1. Dispositif d'alimentation électrique (10) destiné à alimenter un appareil électrique (12) intégré dans un bâtiment ou dans une agglomération, le dispositif (10) comportant :
- une entrée (15) de tension alternative,
- une sortie (16) de tension continue,
- un convertisseur de tension (18) apte à transformer la tension alternative de l'entrée (15) en une tension continue (20), et
- un système de commande (21) apte à interrompre le fonctionnement du convertisseur de tension (18), où :
- le dispositif (10) comporte en outre :
▪ un élément de stockage d'énergie (23), et
▪ un réseau interne (25) de tension continue connecté à l'élément de stockage d'énergie (23), à la sortie (16) et à la tension continue (20) du convertisseur de tension (18),
- et le système de commande (21) est apte :
▪ à détecter un état de charge (Ec) de l'élément de stockage d'énergie (23),
▪ à mesurer un courant (Is) délivré par la sortie (16) de tension continue,
▪ à interrompre le fonctionnement du convertisseur de tension (18) lorsqu'il détecte que le courant (Is) délivré par la sortie (16) de tension continue est inférieur à une première valeur seuil (I1),
▪ à induire le fonctionnement du convertisseur de tension (18) lorsqu'il détecte que la charge (Ec) de l'élément de stockage d'énergie (23) est inférieure à une deuxième valeur seuil (C2), et
▪ à interrompre le fonctionnement du convertisseur de tension (18) lorsqu'il détecte que la charge (Ec) de l'élément de stockage d'énergie (23) est supérieure à une troisième valeur seuil (C3).

2. Dispositif d'alimentation électrique selon la revendication 1, ***caractérisé* en ce que** le réseau interne (25) de tension continue est connecté à la sortie (16) de tension continue par l'intermédiaire d'un second convertisseur de tension (19).

3. Dispositif d'alimentation électrique selon la revendication 1 ou 2, ***caractérisé* en ce que** l'élément de stockage d'énergie (23) est une batterie au lithium.

4. Dispositif d'alimentation électrique selon l'une des revendications 1 à 3, ***caractérisé* en ce que** l'élément de stockage d'énergie (23) présente une capacité comprise entre 5 Wh et 5 KWh.

5. Dispositif d'alimentation électrique selon l'une des revendications 1 à 4, ***caractérisé* en ce que** le dispositif (10) comporte une entrée de commande (28) du système de commande (21), le système de commande (21) étant apte à interrompre ou à induire le fonctionnement du convertisseur de tension (18) en fonction d'un signal (Sc) de l'entrée de commande (28).

6. Dispositif d'alimentation électrique selon la revendication 5, ***caractérisé* en ce que** le signal (Sc) comporte une plage horaire dans laquelle le système de commande (21) interrompt le convertisseur de tension (18).

7. Dispositif d'alimentation électrique selon la revendication 5 ou 6, ***caractérisé* en ce que** le signal (Sc) comporte une information météorologique destinée à prévoir les transitions météorologique du bâtiment ou de l'agglomération.

8. Dispositif d'alimentation électrique selon l'une des revendications 1 à 7, ***caractérisé* en ce que** le dispositif (10) comporte une sortie d'information (29) du système de commande (21).

9. Dispositif d'alimentation électrique selon la revendication 8, ***caractérisé* en ce que** la sortie d'information (29) comporte une information de géolocalisation du dispositif d'alimentation électrique (10) destinée à géolocaliser le dispositif (10) dans le bâtiment ou dans l'agglomération.

10. Bâtiment comportant un dispositif d'alimentation électrique (10) selon l'une des revendications 1 à 9 configuré de sorte à maintenir une consommation du bâtiment inférieure à une valeur donnée, par exemple 50 W/m².

## Patentansprüche

1. Vorrichtung zur Stromversorgung (10) zur Versorgung einer elektrischen Anlage (12), die in einem Gebäude oder in einer Siedlung eingebaut ist, wobei die Vorrichtung (10):
- einen Eingang (15) für Wechselspannung,
- einen Ausgang (16) für Gleichspannung
- einen Spannungswandler (18), der in der Lage ist, die Wechselspannung des Eingangs (15) in Gleichspannung zu wandeln, und
- ein Steuersystem (21), das in der Lage ist, den Betrieb des Spannungswandlers (18) zu unterbrechen, umfasst,
wobei
- die Einrichtung (10) außerdem umfasst:
▪ ein Energiespeicherelement (23), und
▪ ein internes Gleichspannungsnetz (25), das mit dem Energiespeicherelement (23), dem Ausgang (16) und der Gleichspannung (20) des Spannungswandlers (18) verbunden ist,
- und das Steuersystem (21) in der Lage ist:
▪ einen Ladezustand (Ec) des Stromspeicherelementes (23) zu erkennen,
▪ einen Strom (Is), der vom Gleichspannungsausgang (16) geliefert wird, zu messen,
▪ den Betrieb des Spannungswandlers (18) zu unterbrechen, wenn es erkennt, dass der vom Gleichspannungsausgang (16) gelieferte Gleichspannungsstrom (Is) unter einem ersten Schwellenwert (II) liegt,
▪ den Betrieb des Spannungswandlers (18) zu induzieren, wenn es erkennt, dass die Ladung (Ec) des Stromspeicherelementes (23) unter einem zweiten Schwellenwert (C2) liegt, und
▪ den Betrieb des Spannungswandlers (18) zu unterbrechen, wenn es erkennt, dass die Ladung (Ec) des Stromspeicherelementes (23) über einem dritten Schwellenwert (C3) liegt.

2. Vorrichtung zur Stromversorgung gemäß Anspruch 1, ***dadurch gekennzeichnet, dass*** das interne Gleichspannungsnetz (25) mit dem Gleichspannungsausgang (16) über einen zweiten Spannungswandler (19) verbunden ist.

3. Vorrichtung zur Stromversorgung gemäß Anspruch 1 oder 2, ***dadurch gekennzeichnet, dass*** das Stromspeicherelement (23) eine Lithiumbatterie ist.

4. Vorrichtung zur Stromversorgung gemäß einem der Ansprüche 1 bis 3, **dadurch gekennzeichnet, dass** das Stromspeicherelement (23) eine Kapazität zwischen 5 Wh und 5 KWh aufweist.

5. Vorrichtung zur Stromversorgung gemäß einem der Ansprüche 1 bis 4, ***dadurch gekennzeichnet, dass*** die Einrichtung (10) einen Steuereingang (28) des Steuersystems (21) enthält, wobei das Steuersystem (21) in der Lage ist, in Abhängigkeit von einem Signal (Sc) des Steuereingangs (28) den Betrieb des Spannungswandlers (18) zu unterbrechen oder zu induzieren.

6. Vorrichtung zur Stromversorgung gemäß Anspruch 5, ***dadurch gekennzeichnet, dass*** das Signal (Sc) einen Zeitbereich umfasst, in dem das Steuersystem (21) den Spannungswandler (18) unterbricht.

7. Vorrichtung zur Stromversorgung gemäß Anspruch 5 oder 6, ***dadurch gekennzeichnet, dass*** das Signal (Sc) eine metereologische Information umfasst, die dazu dient, die meteorologischen Übergänge des Gebäudes oder der Siedlung vorherzusehen.

8. Vorrichtung zur Stromversorgung gemäß einem der Ansprüche 1 bis 7, ***dadurch gekennzeichnet, dass*** die Einrichtung (10) einen Informationsausgang (29) des Steuersystems (21) umfasst.

9. Vorrichtung zur Stromversorgung gemäß Anspruch 8, ***dadurch gekennzeichnet, dass*** der Informationsausgang (29) eine Information zur Geolokalisierung der Stromversorgungseinrichtung (10) umfasst, die dazu dient, die Einrichtung (10) im Gebäude oder der Siedlung zu geolokalisieren.

10. Gebäude mit einer Vorrichtung zur Stromversorgung (10) gemäß einem der Ansprüche 1 bis 9, das so konfiguriert ist, dass der Verbrauch des Gebäudes unter einem gegebenen Wert liegt, zum Beispiel 50 W/m².

## Claims

1. Electrical power supply device (10) intended to supply power to an electrical appliance (12) in a building or conglomeration, the which device (10) incorporates:
- an AC voltage input (15);
- an DC power outlet (16);
- a voltage converter (18) able to transform the AC voltage at the input (15) into a DC voltage (20); and
- a control system (21) able to interrupt the operation of the voltage converter (18); in which:
- the device (10) also incorporates:
▪ an energy storage system (23); and
▪ an internal DC voltage network (25) connected to the energy storage system (23), to the outlet (16) and to the voltage converter's (18) DC voltage (20);
- and the control system (21) is able to:
▪ detect a charge (Ec) status of the energy storage system (23);
▪ measure a current (Is) coming from the DC power outlet (16);
▪ interrupt the operation of the voltage converter (18) when it detects that the current (Is) coming from the DC power outlet (16) is less than a first threshold value (11);
▪ activate the operation of the voltage converter (18) when it detects the charge (Ec) of the energy storage system (23) is less than a second threshold value (C2); and
▪ interrupt the operation of the voltage converter (18) when it detects that the charge (Ec) of the energy storage system (23) is greater than a third threshold value (C3).

2. Electrical power supply device in accordance with claim 1, ***characterized in that*** the internal DC power network (25) is connected to the DC power outlet (16) via a second voltage converter (19).

3. Electrical power supply device in accordance with claim 1 or claim 2, ***characterized in that*** the energy storage system (23) is a lithium battery.

4. Electrical power supply device in accordance with any one of claims 1 to 3, ***characterized in that*** the energy storage system (23) has a capacity of between 5 Wh and 5 KWh.

5. Electrical power supply device in accordance with any one of claims 1 to 4, ***characterized in that*** the device (10) incorporates a control input (28) from the control system (21), with the control system (21) being able to interrupt or activate the operation of the voltage converter (18), as a function of a signal (Sc) from the control input (28).

6. Electrical power supply device in accordance with claim 5, ***characterized in that*** the signal (Sc) incorporates a time window within which the control system (21) switches off the voltage converter (18).

7. Electrical power supply device in accordance with claim 5 or claim 6, ***characterized in that*** the signal (Sc) incorporates weather information intended to anticipate weather changes around the building or conglomeration.

8. Electrical power supply device in accordance with any one of claims 1 to 7, ***characterized in that*** the device (10) incorporates an information output (29) from the control system (21).

9. Electrical power supply device in accordance with claim 8, ***characterized in that*** the information output (29) incorporates geolocation information for the electrical power supply device (10), intended for geolocating the device (10) within the building or conglomeration.

10. Building incorporating an electrical power supply device (10) in accordance with any one of claims 1 to 9, configured to maintain the building's consumption below a specified value, such as 50 W/m², for example.
